**Europäisches Patentamt**

(19) **European Patent Office**

**Office européen des brevets**

(11) Publication number: **0 322 374 B1**

(12) **EUROPEAN PATENT SPECIFICATION**

(45) Date of publication of patent specification:
17.04.91 Bulletin 91/16

(21) Application number: 88830536.4

(22) Date of filing: 13.12.88

(51) Int. Cl.⁵: **B60N 2/48, A47C 31/02**

(54) **A headrest for motor vehicle seats.**

(30) Priority: 21.12.87 IT 6809887

(43) Date of publication of application:
28.06.89 Bulletin 89/26

(45) Publication of the grant of the patent:
17.04.91 Bulletin 91/16

(84) Designated Contracting States:
AT BE CH DE ES FR GB GR IT LI LU NL SE

(56) References cited:
FR-A- 2 577 869
GB-A- 2 164 248
JP-A-58 203 714
US-A- 3 110 066

(73) Proprietor: GESTIND-M.B." MANIFATTURA
DI BRUZOLO" S.P.A
Strada Statale 25 km. 41
I-10050 Bruzolo (Torino) (IT)

(72) Inventor: De Filippo, Emilio
Via Vergnatte, 2
I-10050 Bruzolo Torino (IT)

(74) Representative: Buzzi, Franco et al
c/o Jacobacci-Casetta & Perani S.p.A. Via
Alfieri, 17
I-10121 Torino (IT)

## Description

The present invention relates to a headrest for motor vehicle seats, comprising a supporting framework which has a central aperture and is intended to be coupled to a pair of support and adjustment shafts, and an annular yielding body which surrounds and incorporates the supporting framework and on the outer surface of which a correspondingly-shaped annular covering is arranged.

A headrest of the type defined above is known from FR-A-2.577.869 of the same Applicant. This document describes a headrest which comprises a framework of plastics material carrying an annular padding constituted by two connected parts and by a covering which is also in two parts, each of which is fitted to a respective part of the padding. A structure of this type is relatively expensive to manufacture, particularly as regards the fitting of the two-part covering.

More particularly, the present invention relates to a headrest according to the pre-characterising portion of claim 1. A headrest of this type is described in JP-A-58 203 714 which shows a headrest comprising a framework, having a central aperture, which is surrounded by an annular yielding body. On the outer surface of the yielding body a covering constituted by a single piece is arranged. An annular moulding is fitted around the periphery of the aperture of the supporting framework in order to retain the edges of the inner sides of the covering. A seat is formed in the lower side of the framework, in which an insert member is inserted to retain the edges of the lower outer side of the covering.

The object of the present invention is to provide a headrest of the above-specified type with a structure which is simple and particularly cheap to manufacture.

In order to achieve this object the present invention provides a headrest of the type specified above, having the features recited in the characterising portion of claim 1.

By virtue of this characteristic, a headrest is obtained which has a simple and light structure constituted by a reduced number of components which are particularly simple and cheap to assemble.

Further characteristics and advantages of the present invention will become clear from the detailed description which follows with reference to the appended drawings, provided by way of non-limiting example, in which :

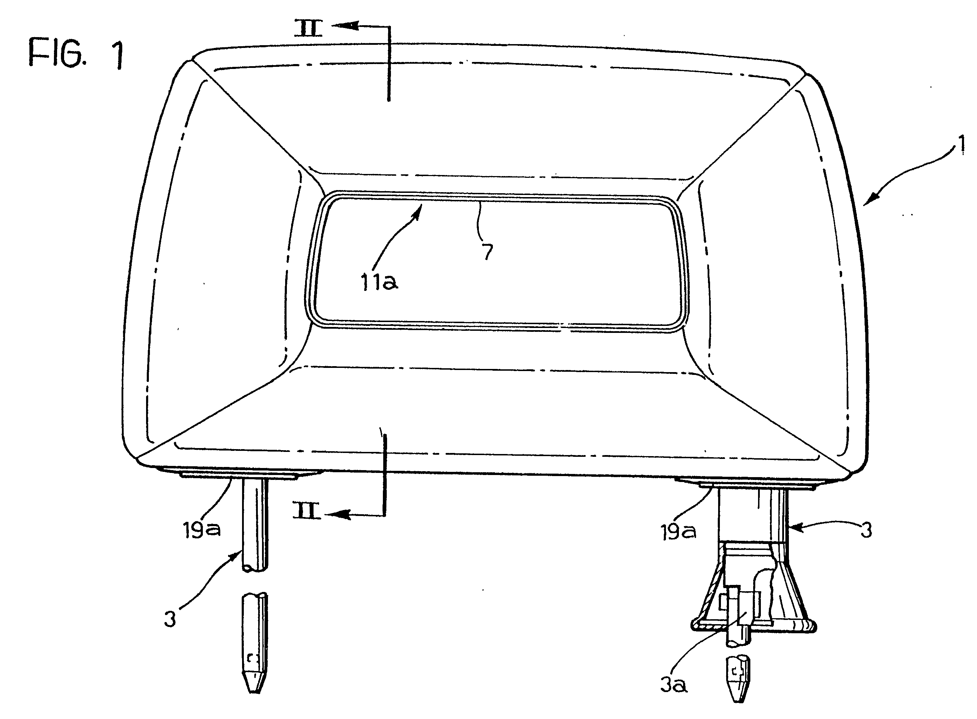

Figure 1 is a front elevational view of a headrest according to the invention,

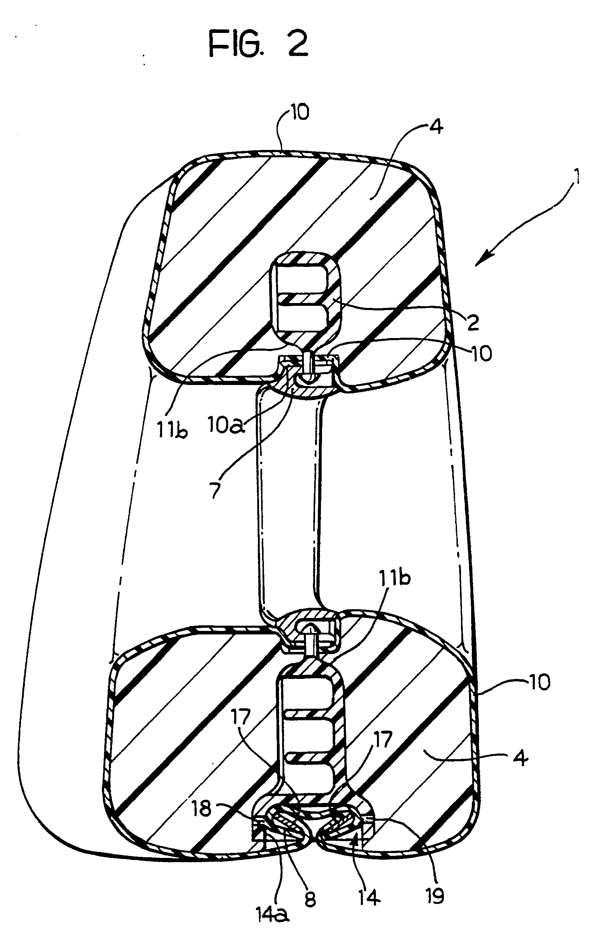

Figure 2 is a section taken on the line II-II of Figure 1, and

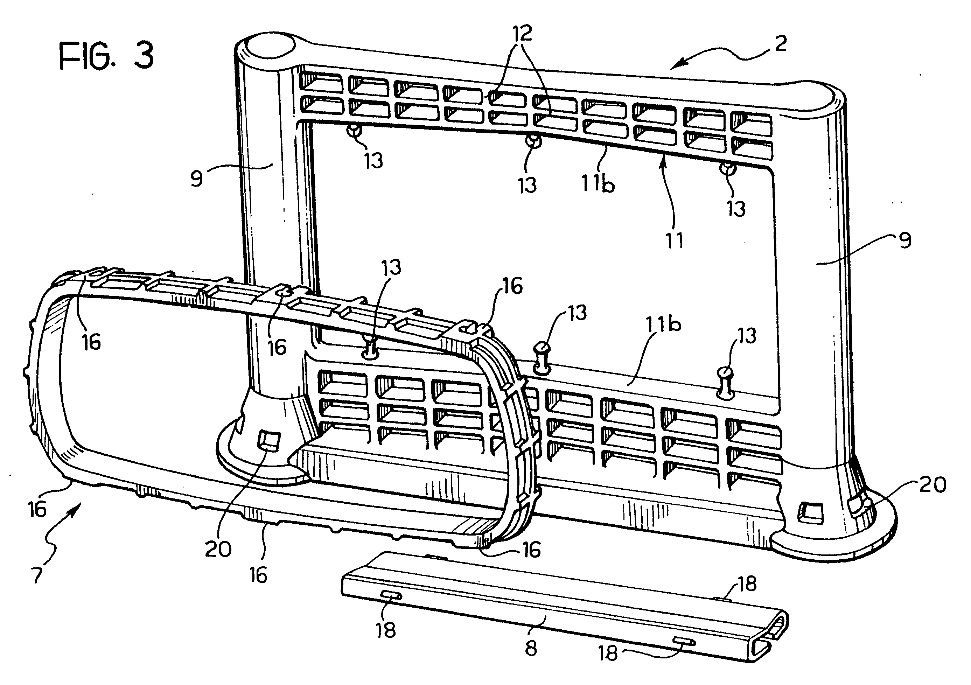

Figure 3 is an exploded perspective view of some components of the headrest according to the invention.

With reference to the drawings, a headrest, generally indicated 1, is intended to be fitted to the top of a motor car seat (not illustrated). The headrest 1 is fitted to the seat by means of a pair of support shafts 3 which enable the step-by-step adjustment of the headrest 1 relative to the seat. In known manner, each of the shafts 3 is provided with a joint 3a which enables the inclination of the headrest 1 to be adjusted. The outer part of the headrest 1 is constituted by a yielding body 4 of expanded elastomeric material, having a central aperture 11a of rounded rectangular shape. A covering 10, for example of cloth, is applied to the outer surface of the body 4. The yielding body 4 incorporates a supporting framework 2 of rigid plastics material, having a slightly curved shape. The framework 2 has a rectangular central aperture 11 which corresponds to the central aperture 11a of the yielding body 4. Two integrally-molded, tubular spacer elements 9 are formed at the ends of framework 2 for engagement with the support shafts 3 in known manner. One face of the framework 2 has a plurality of horizontal and vertical lines of stiffening ribs 12. A series of vertical retaining pegs 13 (in this case consisting of 3 pegs) projects from each of the two horizontal sides 11b of the aperture 11. A substantially channel-like seat 14, with rounded corners and with retaining recesses 19 formed in its sides 14a, is formed in the underside of the framework 2.

A padding of expanded elastomeric material is applied to the framework 2 and constitutes the yielding body 4. The covering 10 is fitted over the yielding body 4 and is constituted by a single annular piece which is open along its inner sides and along its lower outer side. During assembly, the edges of the inner sides of the covering 10, indicated 10a, are superposed against the corresponding horizontal sides 11b of the aperture 11 and attached by means of the pegs 13. The superposed edges 10a are held in this position by an annular molding 7 which, on its outer surface, has projections 16 with holes that are open at one side and snap-engage with the corresponding mushroom-shaped retaining pegs 13 as a result of the sideways insertion of the moulding 7 into the aperture 11. The moulding 7 is of such a size that, after it has been fitted, it exerts a slight radial force on the walls of the aperture 11 so as to firmly retain the edges of the inner sides of the covering 10.

Two strips 17 of semi-rigid plastics material (for example PVC) are previously sewn to the edges of the lower outer side of the covering 10. When the covering 10 is fitted onto the yielding body 4, the strips 17 are folded over and inserted into a C-sectioned channel 8 of rigid plastics material which is inserted in the seat 14 of the framework 2. The section 8 has retaining teeth 18 on its outer surface which snap-engage in the corresponding recesses 19 formed in the side walls of the seat 14. When the section 8 is introduced into the seat 14, the edges of the lower side of the covering 10 are firmly retained, since the plates 17 cannot come out of the section 8. The covering 10 is provided with holes (not illustrated) in its lower part for the passage of the support shafts 3. The edges of the covering are retained in correspondence with these holes by respective tubular elements 19a provided with lateral plates (not illustrated) which snap-engage in corresponding recesses 20 formed on the tubular elements 9 of the supporting framework 2.

## Claims

1. A headrest (1) for motor vehicle seats, comprising a supporting framework (2) which has a central aperture (11) and is intended to be connected to a pair of support and adjustment shafts (3), and an annular yielding body (4) which surrounds and incorporates the supporting framework (2) and on the outer surface of which a correspondingly-shaped covering (10) is arranged, wherein said covering (10) is constituted by a single piece which is open along its inner sides (10a) and along its lower outer side (17), the edges of the inner sides (10a) being set against the corresponding sides (11b) of the central aperture (11) of the supporting framework (2), wherein an annular moulding (7) is fitted around the periphery of the aperture of the supporting framework (2) in order to retain said edges of the inner sides (10a) of the covering (10), and wherein a seat is formed in the lower side of the framework (2), in which an insert member (8) is inserted to retain the edges of the lower outer side (17) of the covering (10), characterised in that :

    – the edges of the inner sides (10a) of the covering (10) are superposed on each other,

    – the supporting framework (2) has a plurality of pegs (13) which project into its aperture (11) and on which the superposed edges (10a) of the covering (10) are anchored,

    – the insert member (8) which is inserted to retain the edges of the lower outer side of the covering (10) is a channel-shaped member which is snap-engaged in the seat (14).

2. A headrest according to claim 1, characterised in that the moulding (7) has a plurality of apertures (16) which are open on one side for the snap-engagement of the pegs (13).

3. A headrest according to claim 1, characterised in that the edges (17) of the lower outer side of the covering (10) have a semi-rigid conformation.

## Ansprüche

1. Kopfstütze (1) für Kraftwagensitze, mit einem Stützrahmen (2), der eine zentrale Öffnung (11) aufweist und mit einem Paar von Trag- und Verstellstäben (3) verbindbar ist, und mit einem nachgiebigen Ringkörper (4), der den Stützrahmen (2) umgibt und einschließt und an dessen Außenfläche eine entsprechend geformte Abdeckung (10) angeordnet ist, wobei die Abdeckung (10) aus einem einzigen Teil besteht, der an seinen Innenseiten (10a) und an seiner unteren Außenseite (17) offen ist, und die Ränder der Innenseiten (10a) an die entsprechenden Seiten (11b) der zentralen Öffnung (11) des Stützrahmens (2) angelegt sind, wobei ein ringförmiger Formteil (7) entlang des Umfangs der Öffnung des Stützrahmens (2) montiert ist, um die Ränder der Innenseiten (10a) der Abdeckung (10) zu halten, und wobei in der Unterseite des Stützrahmens (2) eine Aufnahme ausgebildet ist, in die ein Einsatzelement (8) eingeführt ist, um die Ränder der unteren Außenseite (17) der Abdeckung (10) zu halten, dadurch gekennzeichnet, daß :

    die Ränder der Innenseiten (10a) der Abdeckung (10) übereinander gelegt sind,

    der Stützrahmen (2) mehrere Stifte (13) aufweist, die sich in seine Öffnung (11) erstrecken und an denen die übereinandergelegten Ränder (10a) der Abdeckung (10) verankert sind,

    das Einsatzelement (8), das zum Halten der Ränder der unteren Außenseite der Abdeckung (10) eingesetzt ist, ein kanalförmiger Teil ist, der in die Aufnahme (14) eingeschnappt ist.

2. Kopfstütze nach Anspruch 1, dadurch gekennzeichnet, daß der Formteil (7) mehrere Öffnungen (16) aufweist, die an einer Seite zum Einschnappen der Stifte (13) offen sind.

3. Kopfstütze nach Anspruch 1, dadurch gekennzeichnet, daß die Ränder (17) der unteren Außenseite der Abdeckung (10) eine halbsteife Beschaffenheit haben.

## Revendications

1. Appui-tête (1) pour des sièges de véhicules à moteur, comprenant une structure de support (2) qui comporte une ouverture centrale (11) et qui est destinée à être reliée à une paire d'arbres (3) de support et de réglage, et un corps annulaire élastique (4) qui entoure et incorpore la structure de support (2) et sur la surface extérieure duquel est disposé un habillage de forme correspondante (10), dans lequel ledit habillage (10) est constitué par une seule pièce qui est ouverte le long de ses côtés intérieurs (10a) et le long de son côté inférieur extérieur (17), les bords des côtés intérieurs (10a) étant placés contre les côtés correspondants (11b) de l'ouverture centrale (11) de la structure de support (2), dans lequel un moulage annulaire (7) est adapté autour de la périphérie de l'ouverture de la structure de support (2) afin de retenir lesdits bords des côtés intérieurs (10a) de l'habillage (10), et dans lequel un logement est formé dans le coté inférieur de la structure (2), dans lequel un élément rapporté (8) est inséré pour retenir les bords du côté inférieur extérieur (17) de l'habillage (10), caractérisé en ce que :

– les bords des côtés intérieurs (10a) de l'habillage (10) sont superposés l'un sur l'autre,

– la structure de support (2) comporte une pluralité de tenons (13) qui avancent dans son ouverture (11) et sur lesquels sont ancrés les bords superposés (10a) de l'habillage (10),

– l'élément rapporté (8) qui est inséré pour retenir les bords du côté inférieur extérieur de l'habillage (10) est un élément en forme de canal qui est encliqueté dans le logement (14).

2. Appui-tête selon la revendication 1, caractérisé en ce que le moulage (7) comporte une pluralité d'ouvertures (16) qui sont ouvertes sur un côté pour permettre l'encliquetage des tenons (13).

3. Appui-tête selon la revendication 1, caractérisé en ce que les bords (17) du côté inférieur extérieur de l'habillage (10) ont une configuration semi-rigide.

FIG. 1

EP 0 322 374 B1

# FIG. 2

FIG. 3

EP 0 322 374 B1